(19) **Europäisches Patentamt**

**European Patent Office**

**Office européen des brevets**

(11) **EP 1 635 331 A1**

(12) **EUROPEAN PATENT APPLICATION**

(43) Date of publication:
**15.03.2006 Bulletin 2006/11**

(51) Int Cl.:
***G10L 21/02*** *(2006.01)*

(21) Application number: **04021838.0**

(22) Date of filing: **14.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicant: **SIEMENS AKTIENGESELLSCHAFT
80333 München (DE)**

(72) Inventors:
• **Beaugeant, Christophe, Dr.
81735 München (DE)**
• **Fingscheidt, Tim, Dr.
81371 München (DE)**
• **Suhadi, Suhadi
81673 München (DE)**

(54) **Method for estimating a signal to noise ratio**

(57)  The invention refers to a method for estimating a signal-to-noise ratio of a noisy signal that contains a noise contribution and a clean signal contribution, said noisy signal being split into time frames, each time frame containing a signal segment of said noisy signal, comprising the following steps:

a) frame-wise transforming of a noisy signal segment into a transformation domain;
b) splitting of the transformed noisy signal segment into a plurality of transformation domain bins;
c) deriving an intermediate quantity on basis of the noisy signal in the transformation domain;
d) estimating the signal-to-noise ratio for a first transformation domain bin by considering the intermediate quantity for the first transformation domain bin and by considering the intermediate quantity for at least one second transformation domain bin, which is different from the first transformation domain bin.

FIG 1

## Description

The invention refers to a method for estimating a signal to noise ratio of a noisy signal. Further the invention relates to a method for noise reduction and to a method for speech enhancement.

Background

For a correct processing of signals it is important that unwanted contributions such as noise are low, so that the content of the signal is not falsified. Therefore, various methods for noise reduction haven been proposed.

One field of interest for noise reduction is speech processing, where noise reduction is e.g. applied for treating a speech signal before or after transmission, especially wireless transmission, or as a pre-processing for subsequent speech recognition. Here the scope of the noise reduction may be a better intelligibility of the spoken utterance, more naturalness, or a more comfortable quality in general.

Such speech enhancement often times comprises three distinct parts, which are:

a) A power spectral density (psd) estimation of a noise contribution in a noisy signal or observation, which will be referred to as noise psd estimation;
b) At least one SNR estimation;
c) A weighting of the spectral components of the noisy signal in order to reduce noise.

These three parts will be described further below:

a) Noise psd estimation

State-of-the-art in noise power spectral density (psd) estimation is e.g. "minimum statistics" which tracks spectral minima of the noisy signal (observation) in the frequency domain and is able to cope with non-stationary noise. The processing is usually done in each frequency bin fully separated from the others, or alternatively - in the case of noisy speech signals - the bins are clustered according to the Bark scale. In Bark scale processing several frequency bins are put together to compute a single output valid for all these bins. The ranges of bins put together are psycho-acoustically motivated. As concerns noise reduction for telephony applications, Bark scale processing can be employed for noise psd estimation only. Processing of the noisy speech signal on a Bark scale would be too coarse and would destroy the spectral fine structure which is due to a fundamental regularity of the speech signal, the so-called pitch period. For speech recognition applications however, processing following a psycho-acoustically motivated scale however is common, since the spectral fine-structure - the pitch period - does not matter in most languages for this application.

b) SNR estimation

A signal to noise ratio (SNR) is the ratio between a clean signal contribution and a noise contribution of a signal containing noise. This ratio can vary in time and frequency. The knowledge of the SNR is necessary for a subsequent treatment of the signal where the noise contribution is reduced.

Different definitions of the SNR and different SNR estimation techniques are widely used and therefore a variety of such methods exists. Often this estimation is performed in the frequency domain, where the noise power spectral density of the noise in an individual frequency bin is an important input value for the SNR estimation.

c) Weighting

The vast majority of weighting rules can be expressed as a gain factor to the noisy observation in the frequency domain e.g. after short-time Fourier transformation. Among these are power estimation, which is equivalent to power spectral subtraction, Wiener filter processing, a maximum likelihood estimation (ML) as proposed by McAulay and Malpass [R.J. McAulay and M.L. Malpass, "Speech Enhancement Using a Soft-Decision Noise Suppression Filter", IEEE Transactions on Acoustics, Speech and Signal Processing, vol. 28, no. 2, pp. 137-145, April 1980, equation (31)], minimum mean squared error (MMSE) estimation of the spectral amplitude (MMSE-SA) [Y. Ephraim and D. Malah, "Speech Enhancement Using a Minimum Mean-Square Error Short-Time Spectral Amplitude Estimator", IEEE Transactions on Acoustics, Speech and Signal Processing, vol. 32, no. 6, pp. 1109-1121, December 1984, equation (7)], MMSE estimation of the log-spectral amplitude (MMSE-LSA) [Y. Ephraim and D. Malah, "Speech Enhancement Using a Minimum Mean-Square Error Log-Spectral Amplitude Estimator", IEEE Transactions on Acoustics, Speech and Signal Processing, vol. 33, no. 2, pp. 443-445, April 1985, equation (20)], and finally a minimum least square amplitude estimation [C. Beaugeant and P. Scalart, "Speech Enhancement Using a Minimum Least Square Amplitude Estimator", Proceedings of International Workshop on Acoustic Echo and Noise Control, Darmstadt, Germany, September 2001, pp. 191-194, equation (4)]. Note however that a "weighting rule" sometimes cannot be expressed as a gain factor that is to be applied to the noisy signal bin. In these cases the weighting rule is some general function of the noisy signal (observation) and an SNR value.

All of the approaches listed above assume the statistical independence of neighbouring or adjacent frequency bins.

A general problem is an as accurate as possible SNR estimation, particularly as the effectiveness of the weighting depends on it: If a "wrong" SNR value is estimated, the weighting function modifies the spectral amplitude of the noisy signal in a wrong manner and either a significant level of noise persists in the signal afterwards, or artefacts like musical tones appear, or the speech contribution to the noisy signal becomes unnecessarily distorted. This situation becomes evident by considering the ideal weights dependent on the SNR: If the SNR approaches infinity, an ideal (multiplicative) weight is 1, which means the spectral amplitude of the "noisy" signal will not be modified. If the SNR is extremely low, the weight should approach zero or a small, positive value (in order to keep some level of noise in all cases). The variety of weighting functions more or less determines now only what happens in between these two extreme cases. One can imagine that a wrong SNR value will directly lead either to a too much or to a too less attenuated spectral amplitude.

Object of the Invention:

It is therefore an object of the invention to provide a possibility for SNR estimation that works reliably and does not incur high complexity.

To achieve this objective, a noisy signal, that is a signal containing a clean signal contribution and a noise contribution, is split into time frames, so that a time frame contains a segment of said noisy signal. The noisy signal segment in a time frame is transformed into a transformation domain, e.g. a frequency or cepstrum domain. In this transformation domain the transformed noisy signal segment is split into a plurality, that is at least two, transformation domain bins (henceforth also called transformation bins), e.g. frequency bins.

For the subsequent signal processing a common assumption has been abandoned, which is that the noisy signal at a first frequency is statistically independent of the noisy signal at a second frequency different from the first one. This assumption is reflected in state-of-the-art algorithms such that weighting rules as well as SNR computations are operating only on a single frequency bin.

Following this new approach, the signal to noise ratio, that is a ratio of the clean signal contribution to the noise contribution, is then calculated bin-wise, that is for a transformation domain bin separately such, that for the signal to noise estimation of a first transformation domain bin at least a second transformation domain bin is considered. In other words, if transformation bins are indexed, then for the calculation of the signal to noise ratio of one transformation bin with index k a second transformation bin with an index different from k is considered.

This method has shown estimation results superior to the estimation results according to the state of the art.

This method was not considered by the experts up to now, as the results e.g. in Bark scale processing, where several frequency bins are considered together (that is their contents are combined, i.e. clustered), proved to be not satisfying for signals exhibiting a spectral fine structure and especially not for speech signals. Nevertheless, Bark scale (or other psycho-acoustically motivated scales which cluster several transformation domain bins) processing has been successfully employed e.g. for speech recognition applications. On the basis of a Fourier transformation with successive psycho-acoustically motivated clustering of bins (possibly in combination with further processing) as a transformation in the sense of this invention, any further processing of state of the art SNR estimation again has been done under the assumption of statistically independent (new) transformation domain bins.

In other words, the differences between Bark Scale Processing and the new approach are, that for Bark Scale Processing the combined result of several bins is considered, that is that a kind of averaging takes place.

In contrast, the new approach allows to derive the result for one bin taking into account at least another bin. A further important difference is that Bark scale processing does not preserve the spectral fine-structure e.g. of speech signals, whereas the new approach does and is therefore applicable to speech enhancement applications not only in the noise psd estimation, but also to signal to noise ratio estimation or any other processing that requires to keep the useful speech signal as undistorted as possible.

According to the method, the noisy signal is split into time frames. This splitting can be done by using fixed time intervals, applied one after the other, so that e.g. a, particularly already digitised, signal with N sample values is divided in x time frames, each having N/x sample values.

A splitting appropriate to the noisy signal enhances the analysis.

Alternatively or additionally any windowing function in general sense, as e.g. Hamming windows can be applied in a multiplicative fashion. The Hamming window e.g. puts most emphasis on sample values in the centre of each time frame. Therefore, in a preferred embodiment a windowing is applied in the course of or after the splitting into time frames. This allows an emphasizing of certain parts of the signal thus enhancing the analysis.

According to a preferred embodiment at least a part of the time frames can be partly overlapping, so that parts of the noisy signal segments are identical, before a potential windowing function is used. Overlapping time frames allows to use an overlap-add technique after Fourier transformation, speech enhancement processing, and inverse Fourier transformation. This is particularly appropriate for speech signal processing in telephony applications or other applications, where the human ear is the receiver. But also in speech recognition applications a frame shift unequal to the frame length, which leads to overlapping frames, is a common method.

According to a preferred embodiment at least two additional transformation domain bins are considered to do the processing, i.e. the signal to noise estimation, for the first transformation domain bin. At least one of these two is preceding the first transformation domain bin and at least one is succeeding the first transformation domain bin.

Preceding and succeeding refers here especially to a numbering of the transformation domain bins. E.g., the splitting into frequency bins is done in a frequency range f_min to f_max, where f_min is a minimum frequency and f_max is a maximum frequency. To each bin a frequency range Delta_f is assigned. There are applications, where this Delta_f may vary for the different frequency ranges. Then e.g. the frequency bins may be numbered or indexed from 0 to K, with K being the total number of bins. The numbering can be done in order of rising or falling frequency, but any numberings suited for an analysis are possible. K may be the number of complex-valued samples input and output to a transformation such as the Fourier transform or any other. If the input signal to the transformation is real-valued, K may also denote half of the number of input samples to the transformation plus one. In other words, if the first transformation bin was denoted with index k, then a transformation bin with a different index is considered generally, as already described above, and according to the preferred embodiment at least a transformation bin with a smaller index and at least a transformation bin with a higher index is considered.

According to a further advantageous embodiment the second transformation bin is considered with a weighting factor. This weighting factor can depend on the time frame, on the transformation bin or both. Particularly, the weighting factor can consider a likelihood that speech is present in a time frame. Likelihood in this context means any parameter or set of parameters that contain information whether speech is present in the noisy signal or not. This likelihood can alternatively or in addition relate to speech presence in a particular transformation bin or in a particular set of transformation bins. It can also relate to a combination of speech presence indicators in several different ranges of transformation bins. A likelihood for speech presence is e.g. given in [I. Cohen, "Optimal Speech Enhancement Under Signal Presence Uncertainty Using Log-Spectral Amplitude Estimator", IEEE Signal Processing Letters, vol. 9, no. 4, pp. 112-116, April 2002, equation (16)].

The considered intermediate quantity is according to another embodiment a preliminary signal to noise ratio. A preliminary signal to noise ratio gives an estimate based on state of the art techniques, which consider frequency bins only individually. This preliminary signal to noise ratio is used in the framework of the application as an input quantity for an estimation of the (final) signal to noise ratio. State of the art signal to noise ratio estimators often perform a (weighted) summation over several additive contributions. The intermediate quantity in the scope of this application can also refer to any of these summands or a further function thereof.

According to a further embodiment a method as described above is applied for a noise suppression or reduction system. As the signal to noise estimation is enhanced with respect to the state of the art, noise is supressed or reduced more reliably.

The above described methods can be applied to speech signals as the noisy signal. This provides a possibility for an effective speech enhancement.

Particularly, in relation with speech signals the amount of artefacts occurring due to noise reduction methods according to the state of the art can be reduced, while the level of speech degradation is kept constant.

Alternatively it is thus possible to reduce the amount of speech degradation, and to keep the level of artefacts constant, or even to reduce both, speech degradation and artefacts. Particularly, these artefacts can be residual musical tones.

In the following exemplary embodiments are detailed, which are partly shown in Figures, of which show

Figure 1 a flow diagram of an advantageous implementation of a noise reduction method;

Figure 2 a flow diagram of another advantageous implementation of a noise reduction method;

Figure 3 a flow diagram of yet another advantageous implementation of a noise reduction method;

Figure 4 shows the noisy signal in the time domain and in

Figure 5 as a spectrogram;

Figure 6 shows the clean signal and

Figure 7 shows the corresponding spectrogram;

Figure 8 shows an enhanced signal in the time domain, where a state of the art noise reduction method has been applied and

Figure 9 shows the corresponding spectrogram;

Figure 10 shows the enhanced signal in the time domain, where an improved noise reduction method has been applied and

Figure 11 the corresponding spectrogram.

Even if the embodiments detailed below mainly deal with speech signals, the methods can be applied to arbitrary signals.

The signal to noise estimation method is used generally to find a better estimate of the clean signal. Hence these methods can be used for noise reduction or even suppression.

For speech signals it is often desired to maintain a certain basis noise level. Such noise reduction for speech signals is also referred to as speech enhancement.

The inventors have questioned the statistical independency of different bins in a transformation domain, e.g. frequency bins, and investigated the statistical dependency especially of neighboured bins.

At least two effects contribute to the statistical dependency of neighbouring frequency bins: First the short-time Fourier transform and its window function. Windowing in the time domain corresponds in the frequency domain to convolution with the Fourier transform of the window impulse response. Although the spectral maximum of the window function usually is narrow, direct neighbours in the frequency domain show dependence even if the signal is white noise. In practice however, noise signals are often far from being spectrally white, therefore they inhibit some spectral characteristics that contribute to the statistical dependence of neighbouring frequency bins. Secondly, for noisy speech signals, the speech signal itself inherits some spectral envelope as it is generated by the vocal tract. This effect as well is not negligible.

This new approach has not been applied up to now, even if there are some proposals for post-processing the enhanced speech spectrum that work inter- and intra-frame oriented. They mainly try to eliminate musical tones. These approaches however are only available as non-causal methods, i.e. the methods require even observations later than the frame being currently processed, thus requiring additional delay in a real implementation. Additionally, they are quite heuristic, and sometimes focus more on intelligibility rather than the quality of the speech signal. Finally, these methods or no methods for estimating an SNR, but for improving an already enhanced spectral amplitude by some post-processing.

Figs. 1 to 3:

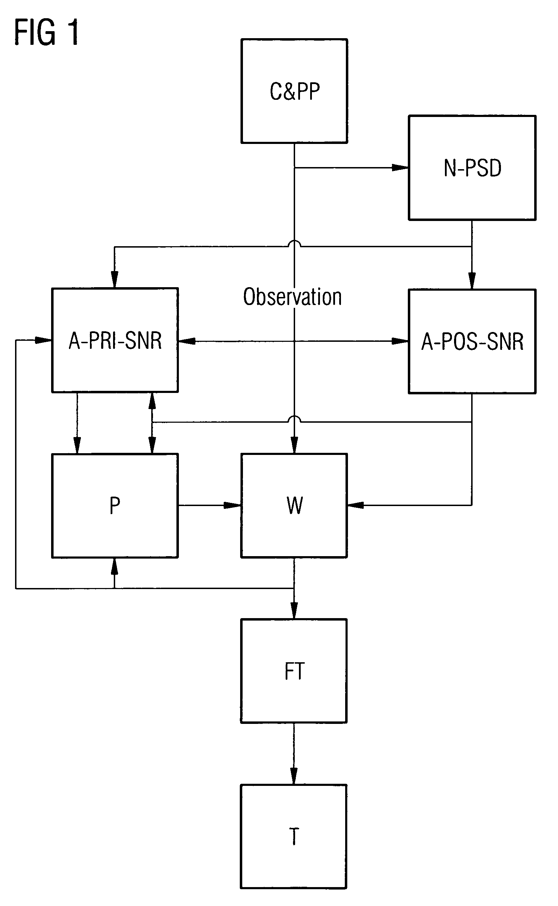

In Figure 1 an exemplary embodiment of an application of the enhanced signal to noise estimation method is shown as a flow diagram.

First, the capturing and processing of the signal (C&PP) is performed yielding the observations in a transformation domain. Then a noise psd estimation (N-PSD) takes place. After that a so-called a-posteriori SNR is computed (A-POS-SNR) as well as a so-called a-priori SNR is estimated (A-PRI-SNR). Then the processing (P) of the SNR estimation is performed yielding an improved value for the a-priori SNR. After that a weighting rule (W) is applied to the observations by-considering the before calculated improved a-priori SNR value and possibly the a-posteriori SNR value as well. After an inverse Fourier transform an overlap-add technique takes place (FT). Finally transmission (T) follows. Transmission may mean speech encoding, or storage, or any further processing such as speech recognition or speaker recognition.

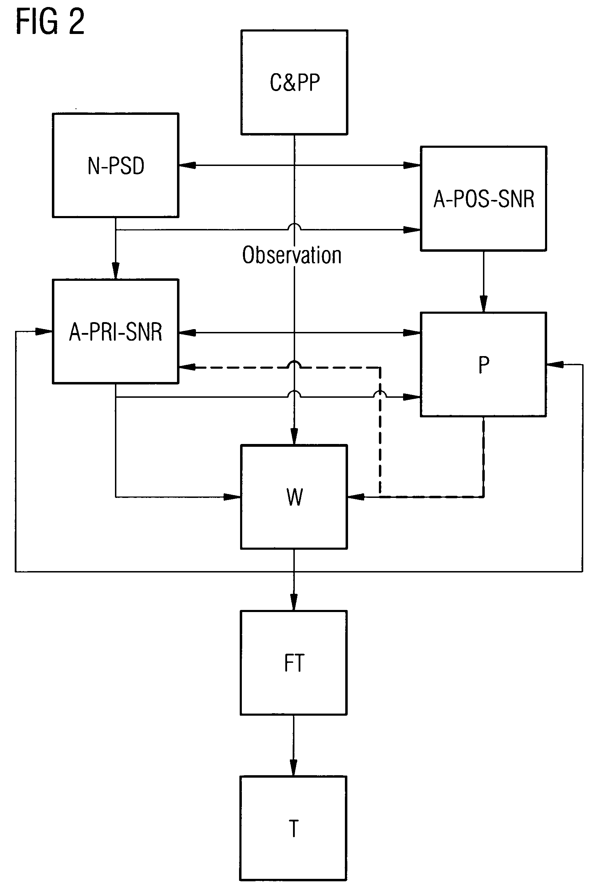

In Figure 2 a similar embodiment is shown. There however the processing (P) serves to improve the a-posteriori SNR in a first place. Dependent on the computation of the a-priori SNR, it may be influenced indirectly as well (dashed signal path in Figure 2). The weighting rule (W) here uses the improved a-posteriori SNR, and possibly the a-priori SNR.

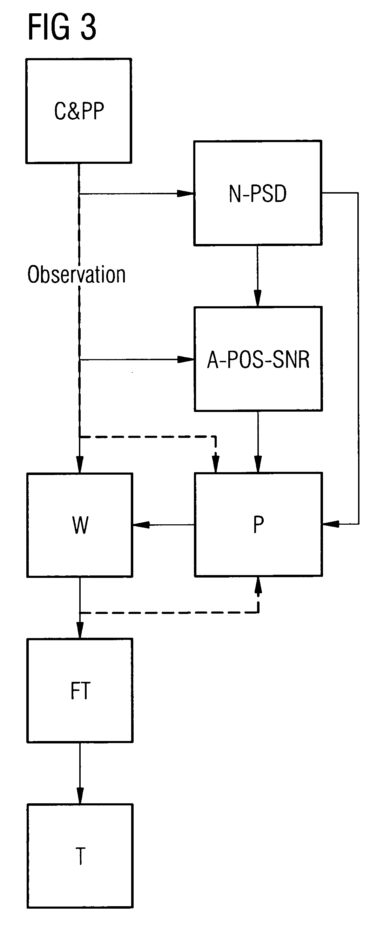

Figure 3 shows an alternative embodiment applicable for weighting rules that require only an a-posteriori type of SNR with no a-priori SNR computation. Dashed signal paths again show optional dependencies and signal flows.

In the following, an embodiment following Figure 1 will be detailed. Alternatives are described where applicable with reference to Figs. 2 and 3.

(0) Capturing and Processing of the Signal C&PP

A signal is captured by use of a microphone. This signal has a clean signal contribution and a noise contribution.

The subsequent processing is done on some signal processor or micro-controller.

The signal is then subject to an analog to digital conversion by an A/D converter, after which it undergoes a framing that splits the signal into time segments in order to facilitate the subsequent processing.

Alternatively, said splitting can be performed before the A/D-conversion.

Said splitting into time frames is done by using rectangular windows. The use of rectangular analysis windows has the advantage of a low computational complexity.

Alternatively or additionally together with or after the rectangular windowing any windowing function in general sense, as e.g. Hamming windowing, can be applied.

The use of Hamming windows or another - non rectangular - windowing function allows the emphasis of segments, which improves the analysis of the signal depending on properties, e.g. as frequency behaviour, overlying noise etc. Particular windows also allow for perfect reconstruction after the processing cascade, which is: Windowing, Fourier transform, Inverse Fourier transform, overlap-add.

The signal segment in a time window or frame 1 is then transformed into the frequency domain by a Fourier transformation for further analysis purposes. Dependent on the length of frame 1, a fast Fourier transform (FFT) can be employed. The transformed signal segment in frame 1 is split into a plurality, that is at least two, frequency bins. A bin is a frequency range that is combined to one observation value. In the frequency domain the clean signal contribution $X_1$ and the noise contribution $D_1$ of the noisy observation or signal $Y_1$ can be described (or are at least assumed) as a sum:

$$Y_l(k) = X_l(k) + D_l(k)$$

Therein the time frames are indexed 1, frequency bins are indexed k.

Alternatively to a transformation in the frequency domain a transformation into the Cepstrum domain is performed and the further analysis is done in this domain.

(1) Noise PSD Estimation

The such pre-processed signal is used for a noise power spectral density (psd) estimation. By noise power spectral density the power of the noise contribution of the signal versus frequency is denoted. This noise psd estimation is necessary in order to derive the properties and quantities of the noise.

This noise psd estimation can be done by a variety of well established methods such as minimum statistics, where the minimum of the noisy signal or noisy observation is tracked and the power level at the minimum is assumed as the power of the noise contribution. For speech signals as noisy signal or noisy observation also the signal power level during speech pauses can be detected and kept constant over the next period of speech activity. Speech pauses again are detected by use of a voice activity detector (VAD).

By these techniques, the noise psd, i.e. the noise spectral variance $\lambda_D$ , is estimated for a frequency bin k. Subsequent SNR estimations will make use of this.

(2) A-posteriori SNR Computation

By using the noise spectral variance $\lambda_{D_l}(k)$ an a-posteriori SNR value $\gamma_l$ can be computed by considering the noisy observation $Y_l(k)$ and applying:

$$\gamma_l(k) := \frac{|Y_l(k)|^2}{\lambda_{D_l}(k)}$$

This a-posteriori-SNR $\gamma_l(k)$ can then later be used in the weighting rule (W) to compute an appropriate gain for the noisy speech spectral amplitude. It can also be used for the computation of a so-called a-priori SNR described later. Finally it may serve in the processing block (P) as well. Computation of the a-posteriori SNR can be identical in all three embodiments Figs. 1-3. Note that the weighting rule (W) is not necessarily driven directly by an a-posteriori SNR (Fig. 1) or an improved a-posteriori SNR after processing (P, see Fig. 2). The respective signal paths are obsolete then and the (improved) a-posteriori SNR in Figs. 1 and 2 serves then mainly to compute an a-priori SNR.

(3) A-priori SNR Estimation

As can be seen in Fig. 3, this computation block is not necessary for every embodiment of this application. There are weighting rules that can be only driven by an a-posteriori SNR, such as Wiener filtering.

Nevertheless, a Wiener type of filter as weighting rule can alternatively be driven by an a-priori SNR estimate $\hat{\xi}'_l(k$ ; also the MMSE-SA and the MMSE-LSA estimators by Ephraim and Malah require an estimate of the a-priori SNR.

A widely used formulation for computing the a-priori SNR $\hat{\xi}'_l(k)$ is

$$\widehat{\xi}''_l(k) = w \frac{\hat{X}^2_{l-1}(k)}{\lambda_{D_{l-1}}(k)} + (1-w)\max\{\gamma_l(k)-1,0\}$$

$$\widehat{\xi}'_l(k) = \max\left\{\widehat{\xi}''_l(k), \widehat{\xi}_{\min}\right\}$$

The maximization with respect to $\widehat{\xi}_{\min}$ can alternatively be omitted or realized in a different stage of computation. The weighting factor w controls the trade-off between residual speech distortions (due to non-complete removal of noise) and the production of so-called musical tones. The factor w is the weighting factor that can advantageously be chosen as 0.98. This estimator for the a-priori SNR is called decision-directed, since it weighs the contribution of the a-posteriori SNR $\gamma_l(k)$ with the contribution of the SNR in the respective frequency bin k of the previous frame (based on the already "decided" enhanced speech spectral amplitude $\hat{X}_l(k)$ in the previous frame).

(4) Processing

Processing (P) according to this invention can be applied on the a-priori SNR, or on the a-posteriori SNR, or even on both. Fig. 1 shows an embodiment, where the processing - that is the improvement of the respective input SNR as intermediate quantity according to this invention - is done for the a-priori SNR. Figs. 2 and 3 on the other hand show an example where the processing takes place on the a-posteriori SNR as input.

Without loss of generality, this functional block is now described as implemented in the embodiment shown in Fig. 1, i.e., working on and improving an a-priori SNR estimate. But note that any SNR input to the processing block (P) in Figs. 1-3 can be regarded as an intermediate quantity that improves the respective SNR estimate.

For each frame the following estimation is performed:

The estimator for the a-priori SNR, which is denoted as $\xi_l(k)$, can be derived by taking the expectation of the squared speech spectral amplitude, given all observations available at the current point in time. This includes of course also a neighbouring frequency bin or even a set thereof. Assuming an intermediate quantity to be known, such as the a-priori SNR from computation block A-PRI-SNR (note again: in Figs. 2 and 3 the intermediate quantity is the a-posteriori SNR), then the estimator can be written as:

$$\hat{\xi}_l(k) = E\{|X_l(k)|^2 \,|\, \hat{\xi}'_l(1),\dots.\hat{\xi}'_l(K)\} / \lambda_{D_l}(k)$$

Further, for all frequency bins 1,...,K, a prediction parameter $\beta_l(k)$ is derived, being also a function of the preliminary a-priori SNR estimates $\hat{\xi}'_l(k)$ as intermediate quantity:

$$\beta_l(k) = f(\hat{\xi}'_l(1),\dots\hat{\xi}'_l(K))$$

This prediction parameter $\beta_l(k)$ reflects the amount of intra-frame correlation of the a-priori SNR estimates. $\beta_l(k)$ is made dependent on preliminary SNR estimates for the following reasons:

The higher the SNR, the less should it be modified by its neighbours, since it is likely to be a spectral harmonic, which should be as much as possible preserved. At low SNR values, however, especially during speech pauses, a strong influence of the neighbour frequency bins can help to eliminate musical tones, i.e. artefacts stemming from the treatment, particularly noise reduction, of the signal. This means that $\beta_l(k)$ should approximate 1 for speech only, i.e. a high $\hat{\xi}'_l(k)$, and approximate 0 for noise only, that means a low $\hat{\xi}'_l(k)$.

SNR and speech absence or presence probability are very closely related. Therefore, for speech signals, as $\beta_l(k)$ the complement of the speech absence probability $\hat{q}(k,l)$ can be used:

$$\beta_l(k) = 1 - \hat{q}(k,l)$$

The speech absence probability is computed according to any state of the art, e.g. proposed by I. Cohen [citation above] . Then, the final estimator can be described as

$$\hat{\xi}_l(k) = \beta_l(k) * \hat{\xi}'_l(k) + \frac{1 - \beta_l(k)}{2} * \hat{\xi}'_l(k-1) + \frac{1 - \beta_l(k)}{2} * \hat{\xi}'_l(k+1)$$

An alternative would be to build a weighted sum over all intermediate quantities of the current frame and possibly previous ones, wherein the weights are depending on some speech absence or presence measure.

(5) Weighting of the Signal

Now a weighting rule depending on the estimated SNR $\xi_l(k)$ can be applied.
A Wiener filter following the weighting rule

$$G_l(k) = \frac{\hat{\xi}_l(k) - 1}{\hat{\xi}_l(k)}$$

can be implemented if only an (improved) a-posteriori SNR is input to the weighting rule (Fig. 3). A Wiener-type of filter following the weighting rule

$$G_l(k) = \frac{\hat{\xi}_l(k)}{1 + \hat{\xi}_l(k)}$$

can be implemented if only an (improved) a-priori SNR is input to the weighting rule (this is one option of Fig. 1). Any of the weighting rules by Ephraim and Malah requiring an a-priori SNR and an a-posteriori SNR can be implemented according to Figs. 1 (the a-priori SNR is improved by the processing (P) functionality) or Fig. 2 (the a-posteriori SNR is improved by the processing (P) functionality, and the a-priori SNR is improved only as it depends on the (improved) a-posteriori SNR).

Finally,

$$\hat{X}_l(k) = G_l(k) * Y_l(k)$$

yields the estimate $\hat{X}_l(k)$ of the clean signal $X_l(k)$ which is enhanced with respect to the state of the art.

Alternatively to the weighting rules given above any other weighting rule can be applied, such as (power) spectral subtraction, maximum likelihood estimation, etc.

(6) Inverse Fourier transform

The phase of the enhanced speech spectral amplitude is taken from the noisy observation, then a back-transformation into the time domain is performed for the enhanced estimate of the clean signal. Finally, an overlap-add technique takes place in order to reconstruct the proper enhanced time domain signal.

(7) Using of the Processed Signal

The enhanced signal can be used now for transmission, for D/A conversion and output by a loudspeaker or saving.

In the following some advantageous embodiments are detailed, where the steps as described above are performed differently:

Embodiment 1:

According to an advantageous embodiment these steps can be performed in a device as will be set out below:

Generally the signal to noise estimation methods described above can be applied for noise reduction by applying an appropriate weighting rule as described under (5).

Especially for speech signals the noise reduction can be seen as a speech enhancement.

Such a method for noise reduction or speech enhancement can be implemented in different parts of a telecommunications network, e.g. a terminal. The terminal is e.g. a mobile phone, a PDA, a PC or a dictation machine.

Embodiment 2:

Alternatively, a method as described above, can also be implemented in the network, e.g. in a network component such as a gateway.

Embodiment 3:

Alternatively the method can be partly performed in the terminal and partly in the network.

Embodiment 4:

In addition to real time conversations, the above detailed methods can also be applied for enhancing off-line speech, e.g. for speech memos recorded in a mobile phone or a PDA.

Furthermore historical recordings, e.g. on LP disks can be improved.

Embodiment 5:

Furthermore an application for speech recognition is foreseen. Then a frequency domain processing is possible, but a cepstral domain processing can be implemented as well. Even if the assumption of noise being additive to the speech signal components does not hold in a variety of transformations being used in speech recognition feature extraction, the processing of preliminary available SNR values as intermediate quantity in that domain can be pursued following as described under (4). Speech recognition features e.g. are often times processed in the cepstral domain: Distance calculations with an MMSE criterion are usually performed in the cepstral domain, so that a noise reduction scheme following the same criterion can be efficiently and reasonably employed in the same domain.

A further application of the speech enhancement methods is foreseen for speech recognition. In the course of the speech recognition the methods can be realised in the pre-processing, that is a stage where the speech signal is being prepared for the recognitions. The advantage is that the methods can be applied independently of the used speech recognition method.

Alternatively the methods can be incorporated into the so called Feature Extraction Module, where a recorded speech signal is described by a limited number of quantities which are later on used for the speech recognition process.

Figs. 4-11

In the following advantages of the new approach are shown by comparing the noisy signal and the enhanced signal derived with the new approach and state of the art methods.

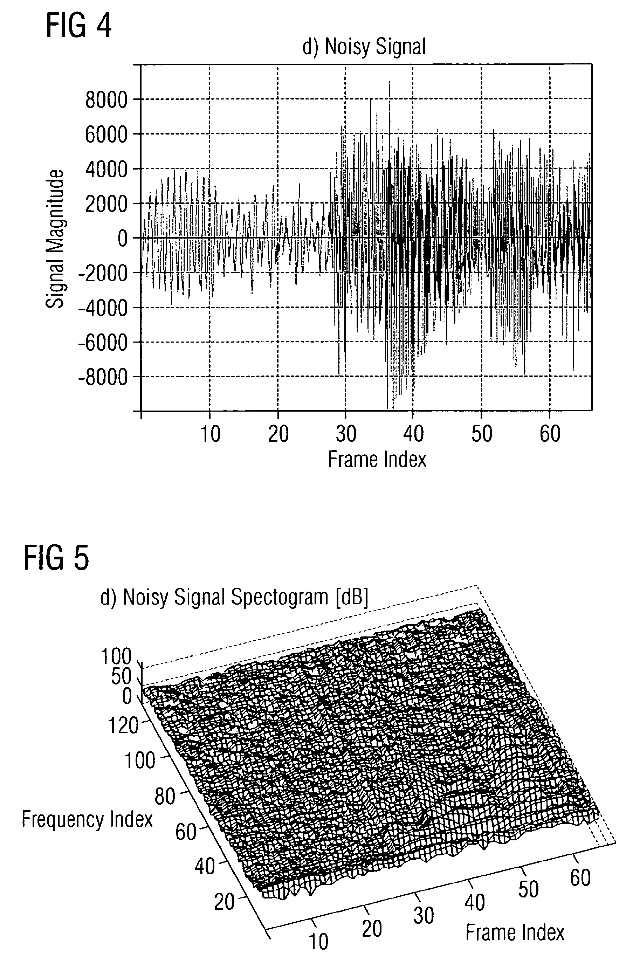

In Figure 4 the noisy signal is depicted versus time. The y-axis shows the signal amplitude and the x-axis shows the frame index which corresponds to time. In Figure 4 the signal in the frames 0 to 25 is considered as a noise signal.

The noisy signal depicted in Figure 4 in the time domain is shown in Figure 5 as a spectrogram, that is in the x/y-plane the frequency versus the frame (or time) and the z-axis shows the power expressed in decibel. One can clearly see, that in the range of the first 25 or 30 frames only noise is present in the signal, later on some signal can be expected perturbed noise.

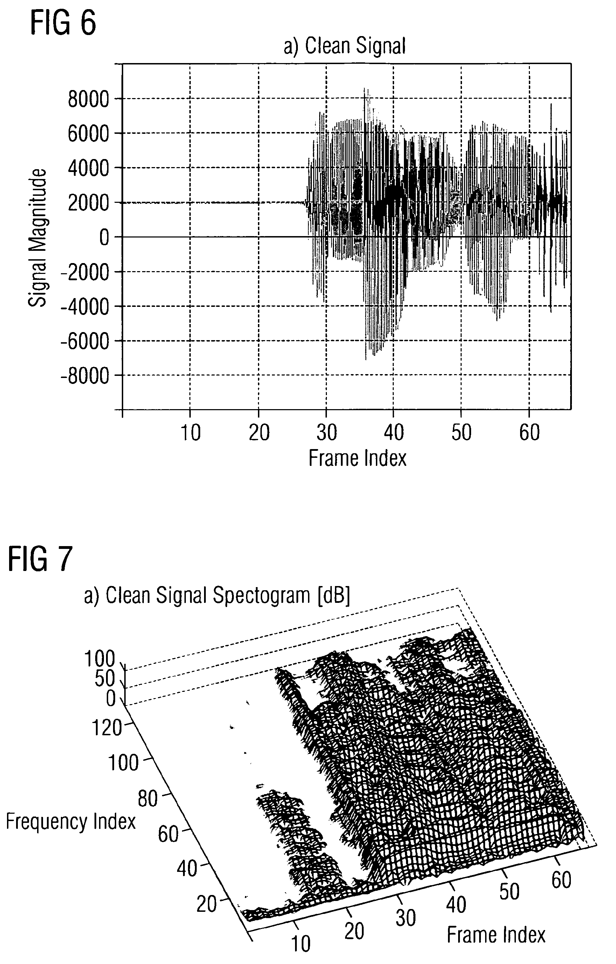

In Figure 6 the clean signal is depicted in the time domain. One can clearly see, that in the first 25 frames, where there is no speech activity, almost no signal is present at all. The corresponding signal spectrogram is depicted in Figure 7. In Figure 7 one can clearly see that only very low power signals are present until frame number 25.

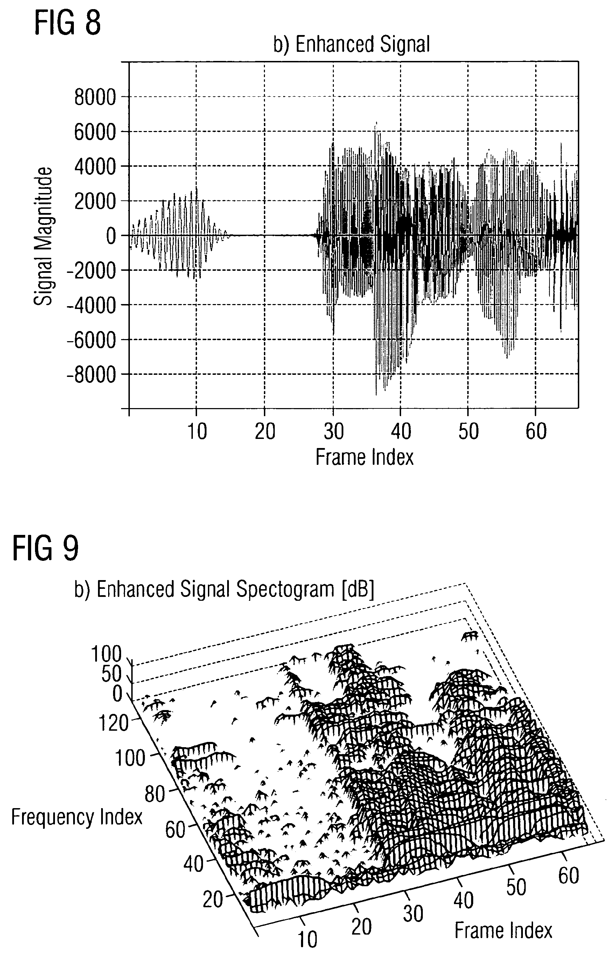

In Fig. 8 an enhanced signal is shown, where the processing has been done with state of the art noise reduction methods. One can clearly see that even if the signal itself (starting at frame 25) is clearly enhanced, however there are artefacts in the first 15 frames. In this case it is what is usually called a musical tone, which is a sinusoidal artefact

In the corresponding spectrogram shown in Figure 9 the consequences of such a noise reduction can be seen: in the first 15 frames there are several sinusoidal (i.e. narrowband) artefacts; also several ones of shorter length (seen as peaks) between frame number 15 and 25. This is due to art effects stemming from the noise reduction. The art effect here is referred to as musical tone because of its sinusoidal structure. Further, speech degradation can be observed at high frame indices 55 to 60 especially for high frequency indices, therein, that the power of the signal is there diminished in comparison with the clean signal.

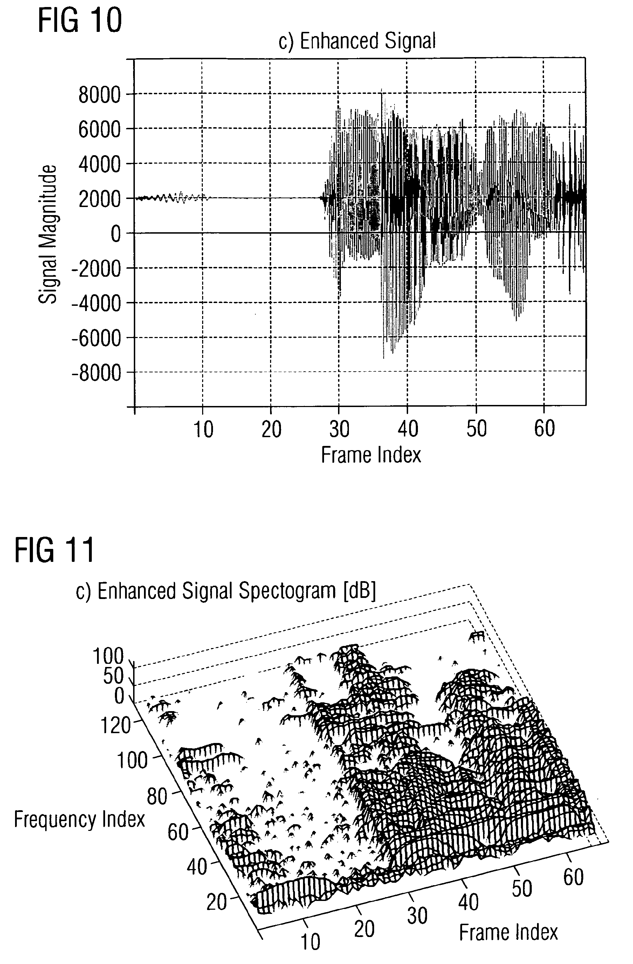

In Figure 10 an enhanced signal is depicted, where the noise is reduced according to one of the above detailed methods. One can clearly see, that the artefact in the first 15 frames, that occurs in Figure 8 for standard noise reduction methods is clearly reduced.

This can be seen also from the spectrogram in Figure 11, where the artefacts for the low frame numbers are clearly reduced while keeping the level of speech degradation, which occurs in the frames with higher indices, more or less constant compared to Figure 9. Moreover, the number of residual noise peaks in the region from frame 15 to 25 has been significantly reduced as well compared to the state of the art in Figure 9.

As already mentioned, the parameters of a noise reduction method according to the invention as detailed above can be also chosen such, that speech is less degraded than for state of the art noise reduction methods while only slightly increasing the artefacts, which occur in Figure 11 or 9 for the lower frame numbers.

The clear advantage in comparison to state of the start noise reduction methods has been shown in Figs. 4-11. This advantage can be exploited for a wide range of applications, as set out above, which is not restricted to speech processing.

**Claims**

1.  Method for estimating a signal-to-noise ratio of a noisy signal that contains a noise contribution and a clean signal contribution, said noisy signal being split into time frames, each time frame containing a signal segment of said noisy signal, comprising the following steps:

    a) frame-wise transforming of a noisy signal segment into a transformation domain;
    b) splitting of the transformed noisy signal segment into a plurality of transformation domain bins;
    c) deriving an intermediate quantity on basis of the noisy signal in the transformation domain;
    d) estimating the signal-to-noise ratio for a first transformation domain bin by considering

    - the intermediate quantity for the first transformation domain bin and
    - by considering the intermediate quantity for at least one second transformation domain bin, which is different from the first transformation domain bin.

2.  Method according to claim 1, wherein the transform domain is a frequency domain or a cepstrum domain.

3.  Method according to claim 1 or 2, wherein at least a part of the time frames are at least partly overlapping.

4.  Method according to any of the previous claims, wherein said splitting into time frames includes a windowing.

5.  Method according to any of the previous claims, wherein in step d) the at least one second considered transformation domain bin stems from the same time frame as the first transformation domain bin.

6. Method according to any of the previous claims, wherein in step d) the at least one second considered transformation domain bin stems from a time frame previous to the time frame of the first transformation bin.

7. Method according to any of the previous claims, wherein at least one transformation domain bin preceding to the first transformation domain bin and at least one transformation domain bin subsequent to the first transformation domain bin is considered.

8. Method according to any of the previous claims, wherein the at least one second transformation bin is considered with a weighting factor.

9. Method according to claim 8, wherein at least one weighting factor depends on the time frame of the noisy signal segment or/and on the transformation domain bin index.

10. Method according to any of the previous claims, wherein the noisy signal is a signal containing speech and the weighting factor contains a likelihood of speech being present or absent in the time frame and/or in any set of transform domain bins.

11. Method according to any of the previous claims, wherein the intermediate quantity derived in step c) is a preliminary estimate of a signal-to-noise ratio.

12. Method according to any of the previous claims wherein the estimating in step d) is done by using the relationship

$$\hat{\xi}_l(k) = \beta_l(k) * \hat{\xi}'_l(k) + \frac{1-\beta_l(k)}{2} * \hat{\xi}'_l(k-1) + \frac{1-\beta_l(k)}{2} * \hat{\xi}'_l(k+1)$$

wherein $\hat{\xi}_l(k)$ denotes an estimate of the signal-to-noise ratio for the frame l and the transformation domain bin with index k, $\beta_l(k)$ is a weighting factor depending on the frame l and the transformation domain bin with index k, and all indices k, l being integer numbers, and $\hat{\xi}'_l(k)$ is a preliminary estimate of a signal to noise ratio.

13. Method according to any of the previous claims wherein in step d) the estimating is done by using the relationship

$$\hat{\xi}_l(k) = \sum_{kappa=0}^{K-1} \beta_{l,k}(kappa) * \hat{\xi}'_l(kappa)$$

wherein $\hat{\xi}_l(k)$ denotes the estimate of the signal-to-noise ratio for the time frame l and transformation domain bin with an index k, $\beta_{l,k}(kappa)$ is a weighting factor depending on the frame l and the bin with index k, kappa being a running variable, and all indices k, l being integer numbers.

14. Use of the method according to any of the previous claims 1 to 13 in a noise reduction system, wherein the method for noise reduction comprises the following steps:

   a') Estimating the noise power spectral density;
   b') Deriving a signal to noise ratio using a method according to any of the claims 1 to 13;
   c') Weighting of the spectral amplitudes of the noisy signal considering the signal to noise ratio.

15. Use of the method according to any of the previous claims 1 to 13 in a speech enhancement system, wherein the speech enhancement comprises the following steps:

   a') Estimating the noise power spectral density on the basis of a signal containing a noise contribution and a clean speech contribution, thus yielding a plurality of noise power spectral densities;
   b') Deriving a signal to noise ratio using a method according to any of the claims 1 to 13;
   c') Weighting of the speech spectral amplitudes considering the signal to noise ratio.

16. Communication device with a microphone for detecting and recording a signal, processing unit for analysing and processing said signal with a method according to claims 1-15.

**17.** Communication system with a processing unit for

- processing a transmitted noisy speech signal which is the input to the system,
- performing a method according to any of the previous claims 1 to 15,
- outputting an enhanced speech signal.

FIG 1

# FIG 2

## FIG 3

## FIG 4

d) Noisy Signal

## FIG 5

d) Noisy Signal Spectogram [dB]

## FIG 6

### a) Clean Signal

## FIG 7

### a) Clean Signal Spectogram [dB]

## FIG 8

### b) Enhanced Signal

### FIG 9

### b) Enhanced Signal Spectogram [dB]

## FIG 10

c) Enhanced Signal

## FIG 11

c) Enhanced Signal Spectogram [dB]

**European Patent Office**

## EUROPEAN SEARCH REPORT

Application Number

EP 04 02 1838

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 096 471 A (TELEFONAKTIEBOLAGET LM ERICSSON) 2 May 2001 (2001-05-02) | 1-11, 13-17 | G10L21/02 |
| A | * paragraph [0001] - paragraph [0005] * <br> * paragraph [0022] - paragraph [0033] * <br> ----- | 12 | |
| X | US 6 363 345 B1 (MARASH JOSEPH ET AL) 26 March 2002 (2002-03-26) | 1-5,7,8, 14-17 | |
| A | * column 4, line 65 - column 5, line 65; figure 2 * <br> ----- | 6,9-13 | |
| X | COHEN I ET AL: "Speech enhancement for non-stationary noise environments" SIGNAL PROCESSING, AMSTERDAM, NL, vol. 81, no. 11, November 2001 (2001-11), pages 2403-2418, XP004308517 ISSN: 0165-1684 | 1-11, 13-17 | |
| A | * paragraph [0002] - paragraph [0004] * <br> ----- | 12 | |
| A | US 2003/078772 A1 (WU KUO-GUAN ET AL) 24 April 2003 (2003-04-24) * paragraph [0019] - paragraph [0028]; figure 2 * <br> ----- | 1-17 | TECHNICAL FIELDS SEARCHED (Int.Cl.7) <br> G10L |
| D,A | EPHRAIM Y ET AL: "SPEECH ENHANCEMENT USING A MINIMUM MEAN-SQUARE ERROR LOG-SPECTRAL AMPLITUDE ESTIMATOR" IEEE TRANSACTIONS ON ACOUSTICS, SPEECH AND SIGNAL PROCESSING, IEEE INC. NEW YORK, US, vol. ASSP-33, no. 2, April 1985 (1985-04), pages 443-445, XP000931203 ISSN: 0096-3518 * page 444, right-hand column, line 1 - line 16 * <br> ----- | 1,16,17 | |

The present search report has been drawn up for all claims

| Place of search | Date of completion of the search | Examiner |
|---|---|---|
| Munich | 14 February 2005 | De Vos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 02 1838

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2005

| Patent document cited in search report | | | Publication date | Patent family member(s) | | | Publication date |
|---|---|---|---|---|---|---|---|
| EP 1096471 | | A | 02-05-2001 | EP | 1096471 | A1 | 02-05-2001 |
| | | | | AT | 277400 | T | 15-10-2004 |
| | | | | AU | 7660800 | A | 14-05-2001 |
| | | | | CN | 1384960 | T | 11-12-2002 |
| | | | | DE | 69920461 | D1 | 28-10-2004 |
| | | | | WO | 0133552 | A1 | 10-05-2001 |
| | | | | JP | 2003513340 | T | 08-04-2003 |
| | | | | US | 6678657 | B1 | 13-01-2004 |
| US 6363345 | | B1 | 26-03-2002 | CA | 2358710 | A1 | 24-08-2000 |
| | | | | CN | 1348583 | T | 08-05-2002 |
| | | | | EP | 1157376 | A1 | 28-11-2001 |
| | | | | JP | 2002537586 | A | 05-11-2002 |
| | | | | WO | 0049602 | A1 | 24-08-2000 |
| US 2003078772 | | A1 | 24-04-2003 | TW | 533406 | B | 21-05-2003 |

EPO FORM P0459

For more details about this annex : see Official Journal of the European Patent Office, No. 12/82